# EUROPEAN PATENT APPLICATION

(11) **EP 4 098 116 A1**
(43) Date of publication of application: **07.12.2022**
(21) Application number: 22173465.0
(22) Date of filing: 16.05.2022
(51) Int. Cl.: A01M 7/00

(54) **SPRAYING WORK METHOD, SPRAYING WORK SYSTEM, AND SPRAYING WORK PROGRAM**

(30) Priority: 31.05.2021 JP 2021091529
(71) Applicant: Yanmar Holdings Co., Ltd., Osaka-shi, Osaka 530-8311 (JP)
(72) Inventor: SUZUKI, Akihiro, Osaka (JP)
(74) Representative: Novagraaf International SA

(57) **Abstract**

[Problem] To provide a spraying work method, a spraying work system, and a spraying work program with which it is possible to improve the work efficiency of a spraying work by an autonomously traveling work vehicle.

[Solution] A spraying work method includes generating a target route R for a work vehicle 10 that performs a spraying work on crops V arranged in a plurality of rows in a field F, causing the work vehicle 10 to autonomously travel along the target route R, and switching a spraying direction of a spray material for the crop V by spraying units 14L and 14R provided in the work vehicle 10 in accordance with a position of either the crop V on a work route R1, on which the work vehicle 10 performs the spraying work while autonomously traveling, or the crop V adjacent to the work route R1.

## Description

### TECHNICAL FIELD

The present invention relates to a spraying work method, a spraying work system, and a spraying work program to perform a spraying work on spray objects arranged in a plurality of rows by an autonomously traveling work vehicle.

### BACKGROUND ART

There are known work vehicles that autonomously travel on a target route while spraying a chemical on crops planted in a working area such as field or farm (see, for example, Patent Literature 1). The work vehicle sprays the chemical in leftward and rightward directions in the work route while autonomously traveling in sequence on a plurality of work routes where the crops are planted.

### PRIOR ART DOCUMENT

### PATENT DOCUMENT

Patent Document 1: Japanese Patent Application Publication No. 2021-000021

### SUMMARY OF INVENTION

### TECHNICAL PROBLEM

Conventional work vehicles uniformly stop a spraying work and move to a subsequent travel route when they reach the end of a crop row, in which the crops are lined up, in a work route direction. Therefore, for example, when the crops are planted such that the ends of the adjacent crop rows extend in an oblique direction with respect to the work route direction, the chemical is sprayed in an area where the crops are not planted on one side (e.g., right side) of the work route or the chemical is not sprayed on the crops on the other side (e.g., left side) of the work route, which causes a disadvantage of a reduction in the work efficiency of the spraying work.

The object of the present invention relates to a spraying work method, a spraying work system, and a spraying work program with which it is possible to improve the work efficiency of a spraying work by an autonomously traveling work vehicle.

### SOLUTION TO PROBLEM

A spraying work method according to the present invention comprising: generating a target route for a work vehicle that performs a spraying work on spray objects arranged in a plurality of rows in a working area; causing the work vehicle to autonomously travel along the target route; and switching a spraying direction of a spray material for the spray object by a spraying unit provided in the work vehicle in accordance with a position of either the spray object on a work route, on which the work vehicle performs the spraying work while autonomously traveling, or the spray object adjacent to the work route.

A spraying work system according to the present invention includes a route generation processing unit and a control information generation processing unit. The route generation processing unit generates a target route for autonomous traveling of a work vehicle that performs a spraying work on spray objects arranged in a plurality of rows in a working area. The control information generation processing unit generates control information for controlling a spraying direction of a spray material for the spray object by a spraying unit provided in the work vehicle in accordance with a position of either the spray object on a work route, on which the work vehicle performs the spraying work while autonomously traveling, or the spray object adjacent to the work route.

A spraying work program according to the present invention causes one or more processors to execute generating a target route for a work vehicle that performs a spraying work on spray objects arranged in a plurality of rows in a working area, causing the work vehicle to autonomously travel along the target route; and switching a spraying direction of a spray material for the spray object by a spraying unit provided in the work vehicle in accordance with a position of either the spray object on a work route, on which the work vehicle performs the spraying work while autonomously traveling, or the spray object adjacent to the work route.

### ADVANTAGEOUS EFFECTS OF INVENTION

According to the present invention, it is possible to provide a spraying work method, a spraying work system, and a spraying work program with which it is possible to improve the work efficiency of a spraying work by an autonomously traveling work vehicle.

### BRIEF DESCRIPTION OF DRAWINGS

FIG. 1 is a schematic diagram illustrating an overall configuration of an autonomous traveling system according to an embodiment of the present invention.
FIG. 2 is a block diagram illustrating a configuration of the autonomous traveling system according to the embodiment of the present invention.
FIG. 3 is an external view of a work vehicle according to the embodiment of the present invention when viewed from the left front side.
FIG. 4A is a left-side external view of the work vehicle according to the embodiment of the present invention when viewed from the left side.
FIG. 4B is a right-side external view of the work vehicle according to the embodiment of the present invention when viewed from the right side.
FIG. 4C is a back-side external view of the work vehicle according to the embodiment of the present invention when viewed from the back side.
FIG. 5 is a diagram illustrating an example of a crop row according to the embodiment of the present invention.
FIG. 6 is a diagram illustrating an example of a target route according to the embodiment of the present invention.
FIG. 7A is a diagram illustrating a method for generating the target route according to the embodiment of the present invention.
FIG. 7B is a diagram illustrating the method for generating the target route according to the embodiment of the present invention.
FIG. 8A is a diagram illustrating a conventional spraying work method of a work vehicle.
FIG. 8B is a diagram illustrating the conventional spraying work method of the work vehicle.
FIG. 8C is a diagram illustrating the conventional spraying work method of the work vehicle.
FIG. 8D is a diagram illustrating the conventional spraying work method of the work vehicle.
FIG. 8E is a diagram illustrating the conventional spraying work method of the work vehicle.
FIG. 9 is a table illustrating control information used for a conventional work vehicle.
FIG. 10A is a diagram illustrating an example of a spraying work method of a work vehicle according to the embodiment of the present invention.
FIG. 10B is a diagram illustrating an example of the spraying work method of the work vehicle according to the embodiment of the present invention.
FIG. 10C is a diagram illustrating an example of the spraying work method of the work vehicle according to the embodiment of the present invention.
FIG. 10D is a diagram illustrating an example of the spraying work method of the work vehicle according to the embodiment of the present invention.
FIG. 10E is a diagram illustrating an example of the spraying work method of the work vehicle according to the embodiment of the present invention.
FIG. 10F is a diagram illustrating an example of the spraying work method of the work vehicle according to the embodiment of the present invention.
FIG. 11 is a table illustrating an example of control information used for the work vehicle according to the embodiment of the present invention.
FIG. 12 is a flowchart illustrating an example of a procedure of an autonomous traveling process executed by the autonomous traveling system according to the embodiment of the present invention.
FIG. 13 is a flowchart illustrating an example of a procedure of a spraying control process executed by the autonomous traveling system according to the embodiment of the present invention.
FIG. 14 is a diagram illustrating an example of a method for turning the work vehicle according to another embodiment of the present invention.
FIG. 15 is a diagram illustrating an example of a spraying work method for the work vehicle according to another embodiment of the present invention.
FIG. 16 is a diagram illustrating an example of a method for turning the work vehicle according to another embodiment of the present invention.

### DESCRIPTION OF EMBODIMENTS

The embodiments below are examples obtained by embodying the present invention and do not limit the technical scope of the present invention.

### [Autonomous Traveling System 1]

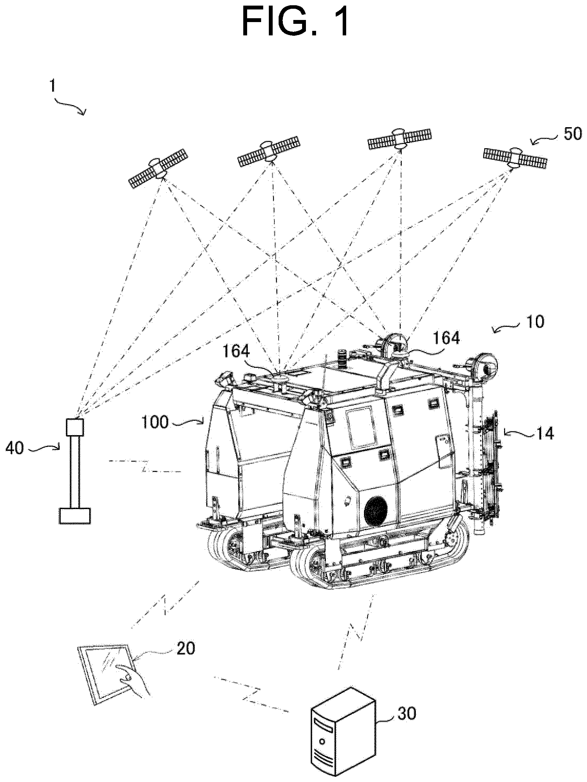

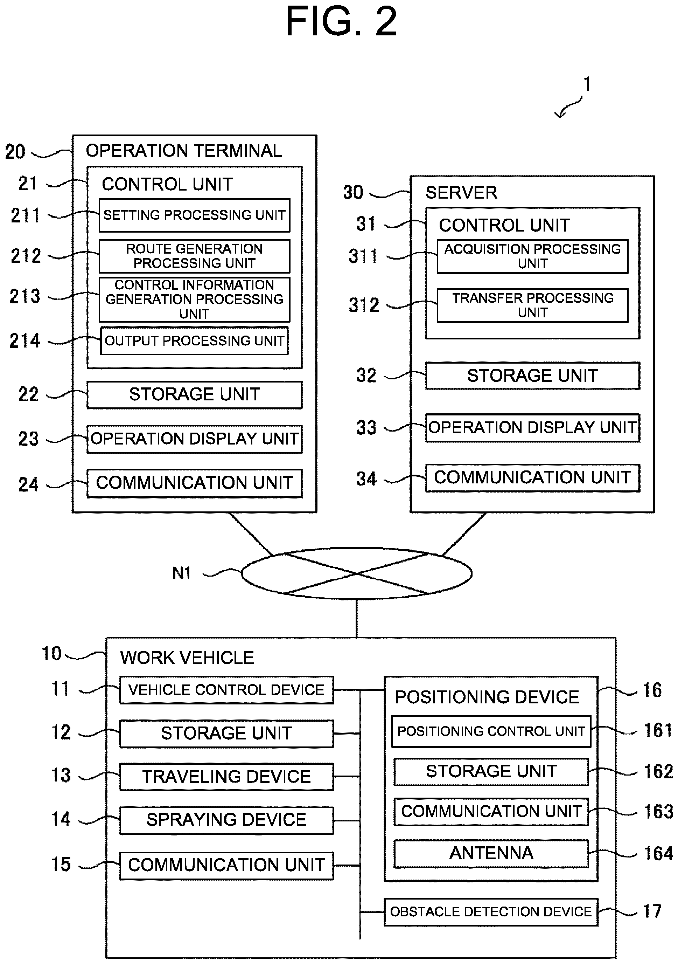

As illustrated in FIGS. 1 and 2, an autonomous traveling system 1 according to an embodiment of the present invention includes a work vehicle 10, an operation terminal 20, a server 30, a base station 40, and a satellite 50. The work vehicle 10, the operation terminal 20, and the server 30 may communicate with each other via a communication network N1. For example, the work vehicle 10 and the operation terminal 20 may communicate with each other via a cellular telephone network, a packet network, or a wireless LAN. Furthermore, each of the work vehicle 10 and the operation terminal 20 may communicate with the server 30 via a cellular telephone network, a packet network, or a wireless LAN.

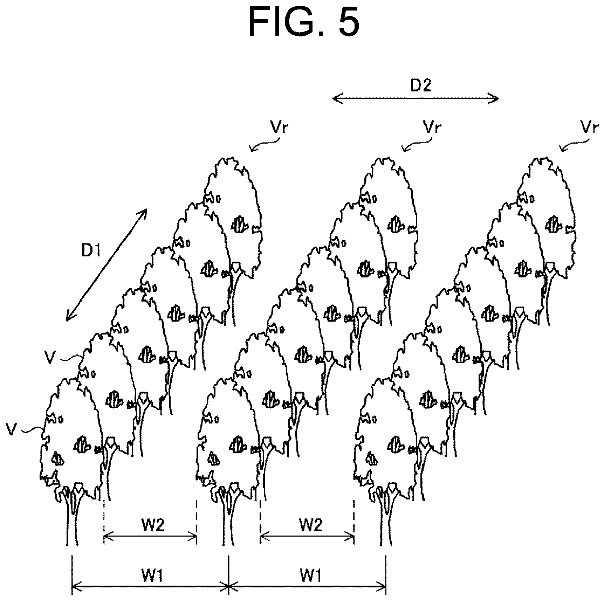

The work vehicle 10 is a vehicle that performs a spraying work to spray a spray material such as chemical or water on a crop V (see FIG. 5) planted in a field F. The field F is an example of a working area according to the present invention, e.g., an orchard for grapes or apples. The crop V is an example of a spray object according to the present invention and is, for example, a grape tree.

The crops V are arranged in a plurality of rows at a predetermined interval in the field F. Specifically, as illustrated in FIG. 5, the crops V are planted in a straight line in a predetermined direction (a direction D 1) to form a crop row Vr including the crops V arranged in a straight line. FIG. 5 illustrates the three crop rows Vr. The crop rows Vr are arranged with a predetermined interval W1 in a row direction (a direction D2). An area (space) having an interval W2 between the adjacent crop rows Vr is a work passage where the work vehicle 10 performs the spraying work on the crops V while traveling in the direction D1. The crop row Vr is an example of a spray object row according to the present invention.

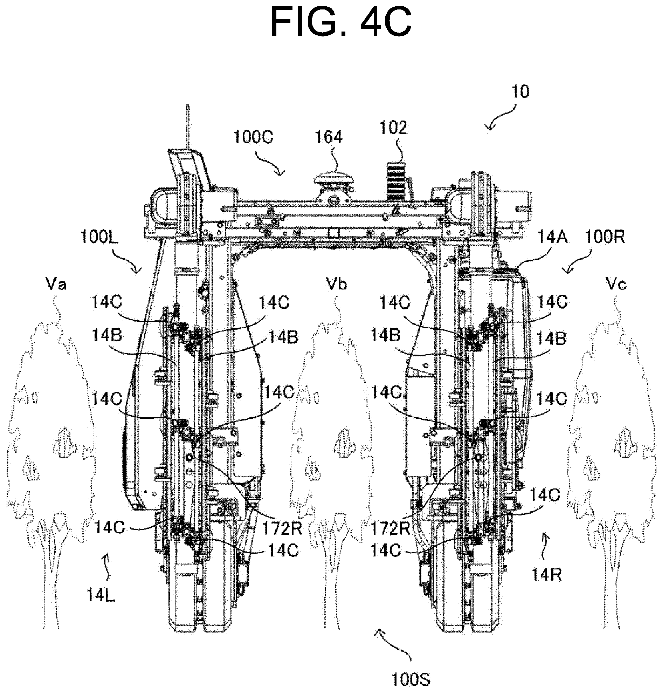

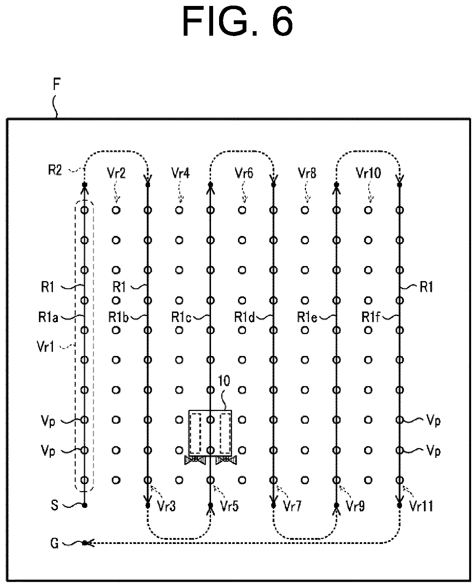

Furthermore, the work vehicle 10 may travel autonomously (travel in a self-directed way) along a previously set target route R. For example, as illustrated in FIG. 6, the work vehicle 10 autonomously travels along the target route R including a work route R1 (work routes R1a to R1f) and a movement route R2 from a work start position S to a work end position G. The work route R1 is a straight route where the work vehicle 10 performs a spraying work on the crops V, and the movement route R2 is a route where the work vehicle 10 moves between the crop rows Vr without performing the spraying work. The movement route R2 includes, for example, a turning route and a straight route. In the example illustrated in FIG. 6, the crops V including crop rows Vr1 to Vr11 are provided in the field F. In FIG. 6, "Vp" denotes a position (crop position) where the crop V is planted. Further, the work vehicle 10 traveling in the field F in FIG. 6 includes a vehicle body 100 having a gate-like shape (see FIG. 4C) to spray the chemical on the crops V in the crop row Vr and in the adjacent crop row Vr while traveling over the one crop row Vr. For example, as illustrated in FIG. 6, when the work vehicle 10 travels over the crop row Vr5, a left vehicle body (a left portion 100L) of the work vehicle 10 travels in a work passage between the crop row Vr4 and the crop row Vr5, and a right vehicle body (a right portion 100R) of the work vehicle 10 travels in a work passage between the crop row Vr5 and the crop row Vr6 to spray the chemical on the crops V in the crop rows Vr4, Vr5, and Vr6.

Furthermore, the work vehicle 10 autonomously travels in a predetermined row order. For example, the work vehicle 10 travels over the crop row Vr1, then travels over the crop row Vr3, and then travels over the crop row Vr5. In this manner, the work vehicle 10 autonomously travels in accordance with a previously set order of the crop rows Vr. Moreover, the work vehicle 10 may travel every two rows in the order in which the crop rows Vr are arranged or may travel every three or more rows.

The satellite 50 is a positioning satellite that forms a satellite positioning system such as the Global Navigation Satellite System (GNSS) to transmit GNSS signals (satellite signals). The base station 40 is a reference point (reference station) that forms the satellite positioning system. The base station 40 transmits, to the work vehicle 10, correction information for calculating the current position of the work vehicle 10.

A positioning device 16 mounted on the work vehicle 10 performs a positioning process to calculate the current position (latitude, longitude, and altitude), the current orientation, and the like, of the work vehicle 10 by using the GNSS signal transmitted from the satellite 50. Specifically, the positioning device 16 determines the position of the work vehicle 10 by using a Real Time Kinematic (RTK) method, or the like, for determining the position of the work vehicle 10 based on positioning information (GNSS signal, etc.) received by two receivers (an antenna 164 and the base station 40) and the correction information generated by the base station 40. As the above-described positioning method is a well-known technique, the detailed description is omitted.

Each component included in the autonomous traveling system 1 will be described below in detail.

### [Work Vehicle 10]

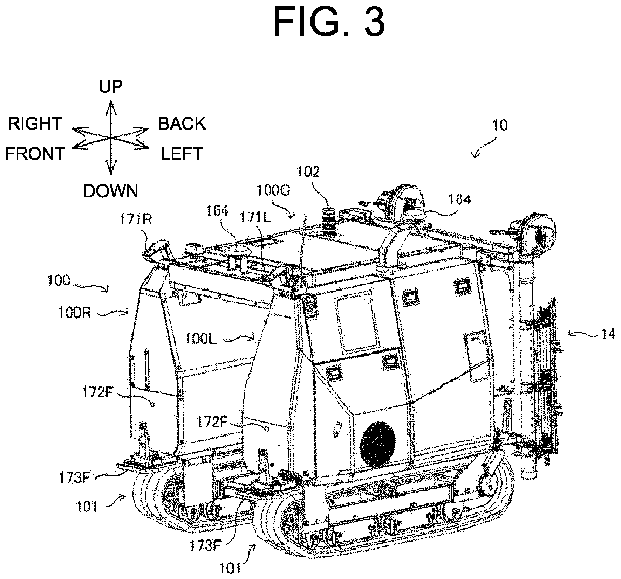

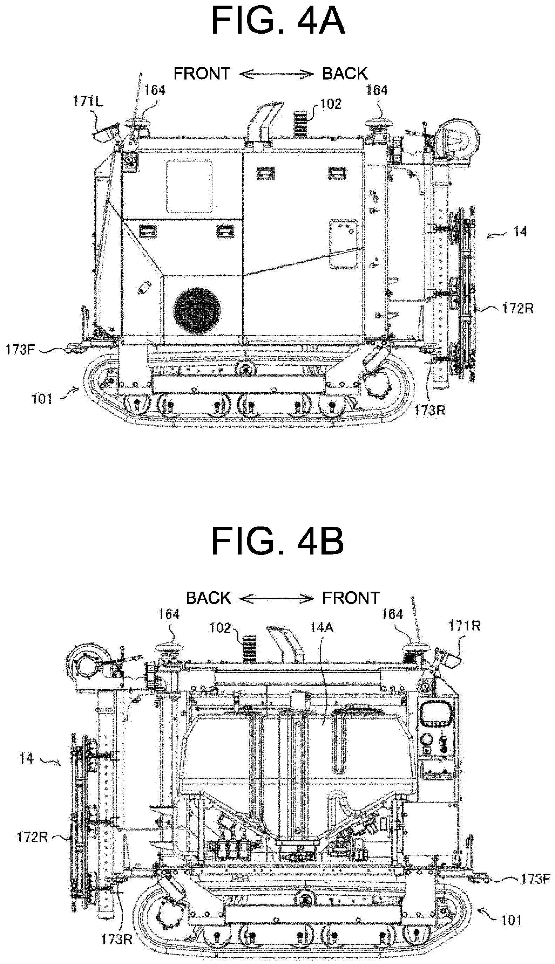

FIG. 3 is an external view of the work vehicle 10 when viewed from the left front side. FIG. 4A is a left-side external view of the work vehicle 10 when viewed from the left side, FIG. 4B is a right-side external view of the work vehicle 10 when viewed from the right side, and FIG. 4C is a back-side external view of the work vehicle 10 when viewed from the back side.

As illustrated in FIGS. 1 to 4, the work vehicle 10 includes a vehicle control device 11, a storage unit 12, a traveling device 13, a spraying device 14, a communication unit 15, the positioning device 16, an obstacle detection device 17, and the like. The vehicle control device 11 is electrically coupled to the storage unit 12, the traveling device 13, the spraying device 14, the positioning device 16, the obstacle detection device 17, and the like. Further, the vehicle control device 11 and the positioning device 16 may enable a wireless communication.

The communication unit 15 is a communication interface that connects the work vehicle 10 to the communication network N1 by wire or wirelessly to perform a data communication in accordance with a predetermined communication protocol with external devices such as the operation terminal 20 and the server 30 via the communication network N1.

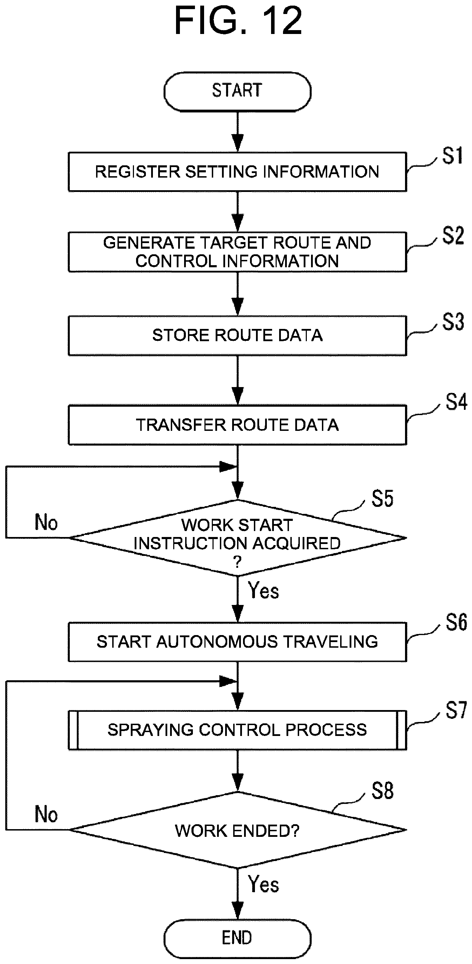

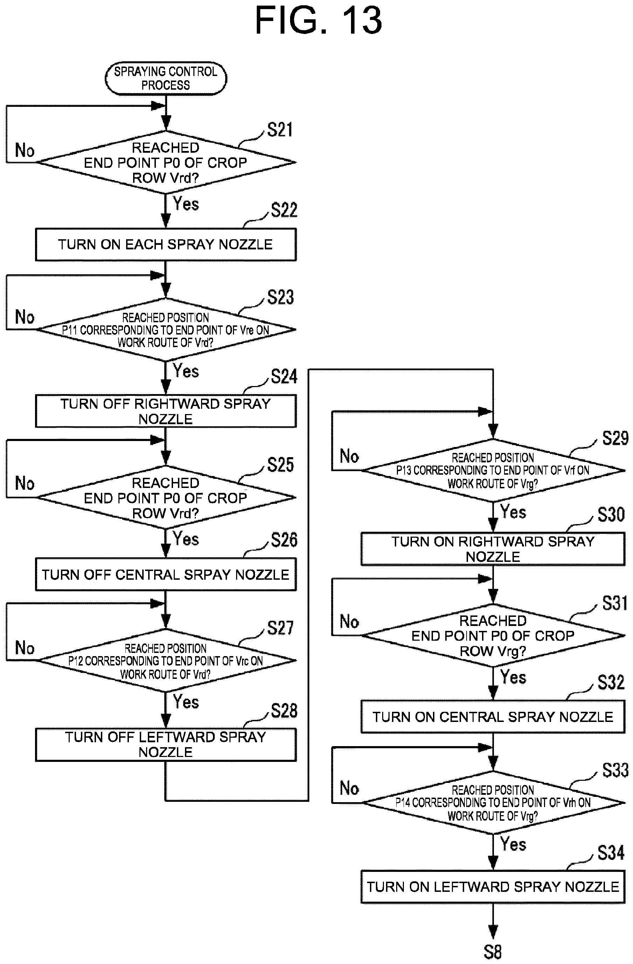

The storage unit 12 is a non-volatile storage unit such as a hard disk drive (HDD) or a solid state drive (SSD) that stores various types of information. The storage unit 12 stores a control program such as an autonomous traveling program that causes the vehicle control device 11 to perform an autonomous traveling process (see FIGS. 12 and 13) described below. For example, the autonomous traveling program is recorded in a non-transitory manner on a computer-readable recording medium such as a CD or a DVD and is read by a predetermined reading device (not illustrated) and stored in the storage unit 12. Furthermore, the autonomous traveling program may be downloaded from a server (e.g., the server 30) to the work vehicle 10 via the communication network N1 and stored in the storage unit 12. Moreover, the storage unit 12 stores route data including information on the target route R generated by the operation terminal 20 and control information F1 (described below) for controlling the spraying direction. For example, the route data is transmitted from the operation terminal 20 to the server 30, transferred from the server 30 to the work vehicle 10, and stored in the storage unit 12.

The vehicle control device 11 includes control devices such as a CPU, a ROM, and a RAM. The CPU is a processor that executes various arithmetic operations. The ROM is a non-volatile storage unit that previously stores control programs such as a BIOS and an OS for causing the CPU to execute various arithmetic operations. The RAM is a volatile or non-volatile storage unit that stores various types of information and is used as a temporary storage memory (work area) for various processes executed by the CPU. Furthermore, the vehicle control device 11 executes various control programs previously stored in the ROM or the storage unit 12 by the CPU to control the work vehicle 10.

The vehicle control device 11 controls traveling of the work vehicle 10. Specifically, the vehicle control device 11 causes the work vehicle 10 to autonomously travel along the target route R based on the position information indicating the position of the work vehicle 10 determined by the positioning device 16. For example, when the positioning state is a state enabling RTK positioning and the operator presses a start button on an operation screen of the operation terminal 20, the operation terminal 20 outputs a work start instruction to the work vehicle 10. When the work start instruction is acquired from the operation terminal 20, the vehicle control device 11 starts autonomous traveling of the work vehicle 10 based on the position information indicating the position of the work vehicle 10 determined by the positioning device 16. Accordingly, the work vehicle 10 starts autonomous traveling along the target route R and starts a spraying work by the spraying device 14 in the work passage.

Further, when a traveling stop instruction is acquired from the operation terminal 20, the vehicle control device 11 stops the autonomous traveling of the work vehicle 10. For example, when the operator presses a stop button on an operation screen of the operation terminal 20, the operation terminal 20 outputs the traveling stop instruction to the work vehicle 10. The vehicle control device 11 stops the autonomous traveling of the work vehicle 10 when the traveling stop instruction is acquired from the operation terminal 20. Accordingly, the work vehicle 10 stops the autonomous traveling and stops the spraying work by the spraying device 14.

The work vehicle 10 includes the gate-shaped vehicle body 100 that travels over the crops V (fruit trees) planted in a plurality of rows in the field F. As illustrated in FIG. 4C, the vehicle body 100 is formed in the shape of a gate by the left portion 100L, the right portion 100R, and a coupling portion 100C coupling the left portion 100L and the right portion 100R to obtain a space 100S that allows passage of the crops V inside the left portion 100L, the right portion 100R, and the coupling portion 100C.

Crawlers 101 are provided at the respective lower ends of the left portion 100L and the right portion 100R of the vehicle body 100. An engine (not illustrated), a battery (not illustrated), and the like, are provided in the left portion 100L. A storage tank 14A (see FIG. 4B), and the like, of the spraying device 14 are provided in the right portion 100R. In this manner, the components are distributed and arranged on the left portion 100L and the right portion 100R of the vehicle body 100 to achieve the desirable balance and the low center of gravity of the work vehicle 10. As a result, the work vehicle 10 may travel stably on a slope surface, or the like, of the field F.

The traveling device 13 is a driving unit that causes the work vehicle 10 to travel. The traveling device 13 includes the engine, the crawlers 101, etc.

The right and left crawlers 101 are driven by the power from the engine in the state enabling an independent variable speed by a hydrostatic infinite variable-speed device. Accordingly, the vehicle body 100 enters a forward-traveling state to travel straight in a forward direction due to the equal-speed driving of the right and left crawlers 101 in a forward direction and enters a backward-traveling state to travel straight in a backward direction due to the equal-speed driving of the right and left crawlers 101 in the backward direction. Further, the vehicle body 100 enters a forward-turning state to turn while traveling forward due to unequal-speed driving of the right and left crawlers 101 in the forward direction and enters a backward-turning state to turn while traveling backward due to unequal-speed driving of the right and left crawlers 101 in the backward direction. Further, the vehicle body 100 enters a pivot turn (skid turn) state due to the driving of one of the right and left crawlers 101 while the driving of the other crawler 101 is stopped and enters a spin turn (neutral turn) state due to the equal-speed driving of the right and left crawlers 101 in the forward direction and the backward direction. Further, the vehicle body 100 enters a traveling stop state due to the driving stop of the right and left crawlers 101. Moreover, the right and left crawlers 101 may be configured to be electrically driven by an electric motor.

As illustrated in FIG. 4C, the spraying device 14 includes the storage tank 14A that stores the chemical or the like, a spray pump (not illustrated) that pumps the chemical or the like, an electric spray motor (not illustrated) that drives the spray pump, two spray pipes 14B arranged in parallel each on right and left in a vertical position on a back portion of the vehicle body 100, three spray nozzles 14C for each of the spray pipes 14B, i.e., the 12 spray nozzles 14C in total, an electronically controlled valve unit (not illustrated) that changes the spray amount and spray pattern of the chemical or the like, a plurality of spray ducts (not illustrated) coupling the above components, etc.

Each of the spray nozzles 14C is attached to the corresponding spray pipe 14B so as to change the position in a vertical direction. Thus, for each of the spray nozzles 14C, the interval with the adjacent spray nozzle 14C and the height position with respect to the spray pipe 14B may be changed in accordance with the spray object (the crop V). Further, each of the spray nozzles 14C is attached so as to change the height position and the right and left position with respect to the vehicle body 100 in accordance with the spray object.

Further, in the spraying device 14, the number of the spray nozzles 14C provided in each of the spray pipes 14B may be changed in various ways depending on the type of the crop V, the length of each of the spray pipes 14B, etc.

As illustrated in FIG. 4C, the three spray nozzles 14C included in the plurality of spray nozzles 14C and provided in the leftmost spray pipe 14B spray the chemical in a leftward direction toward a crop Va located on a left outer side of the vehicle body 100. The three spray nozzles 14C included in the plurality of spray nozzles 14C and provided in the left inner spray pipe 14B adjacent to the leftmost spray pipe 14B spray the chemical in a rightward direction toward a crop Vb located in the space 100S at the center of the vehicle body 100 in the right and left direction. The three spray nozzles 14C included in the plurality of spray nozzles 14C and provided in the rightmost spray pipe 14B spray the chemical in a rightward direction toward a crop Vc located on a right outer side of the vehicle body 100. The three spray nozzles 14C included in the plurality of spray nozzles 14C and provided in the right inner spray pipe 14B adjacent to the rightmost spray pipe 14B spray the chemical in a leftward direction toward the crop Vb located in the space 100S.

With the above configuration, in the spraying device 14, the two spray pipes 14B and the six spray nozzles 14C provided in the left portion 100L of the vehicle body 100 function as a left spraying unit 14L. Further, the two spray pipes 14B and the six spray nozzles 14C provided in the right portion 100R of the vehicle body 100 function as a right spraying unit 14R. Moreover, the right and left spraying units 14R and 14L are provided in the back portion of the vehicle body 100 with a right-left interval that allows the passage (the space 100S) of the crop Vb between the right and left spraying units 14R and 14L so as to spray in the rightward and leftward directions.

In the spraying device 14, the spray pattern by the spraying units 14L and 14R includes a 4-direction spray pattern for spraying the chemical in both the rightward and leftward directions by each of the spraying units 14L and 14R and a direction-limited spray pattern with which the spray directions by the spraying units 14L and 14R are limited. The direction-limited spray pattern includes a left 3-direction spray pattern with which the spraying unit 14L sprays the chemical in both the rightward and leftward directions and the spraying unit 14R sprays the chemical only in the leftward direction, a right 3-direction spray pattern with which the spraying unit 14L sprays the chemical only in the rightward direction and the spraying unit 14R sprays the chemical in both the rightward and leftward directions, a 2-direction spray pattern with which the spraying unit 14L sprays the chemical only in the rightward direction and the spraying unit 14R sprays the chemical only in the leftward direction, a left 1-direction spray pattern with which the spraying unit 14L sprays the chemical only in the leftward direction and the spraying unit 14R does not spray the chemical, and a right 1-direction spray pattern with which the spraying unit 14R sprays the chemical only in the rightward direction and the spraying unit 14L does not spray the chemical.

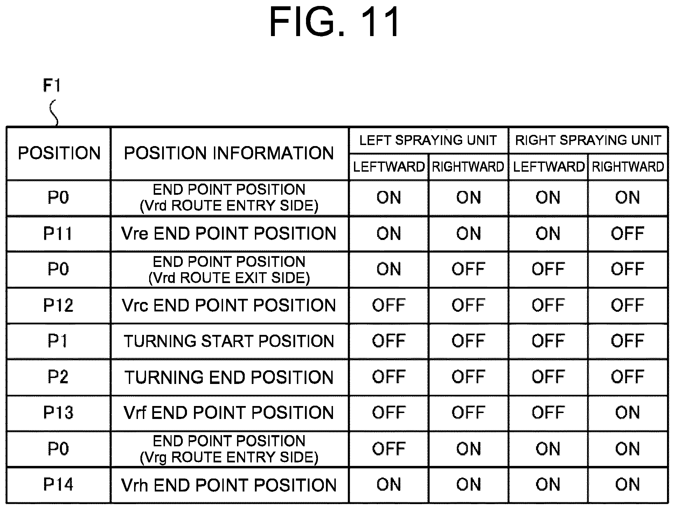

The spraying device 14 performs a switching process to switch the spray direction (spray pattern) of the chemical based on the control information F1 (FIG. 11) included in the route data transferred from the server 30. Specifically, the spraying device 14 functions as a switching processing unit for the spray pattern. The method for switching the spray pattern will be described below.

The vehicle body 100 includes an autonomous traveling control unit that causes the vehicle body 100 to autonomously travel along the target route R in the field F based on the positioning information, or the like, acquired from the positioning device 16, an engine control unit that performs the control regarding the engine, a hydrostatic transmission (HST) control unit that performs the control regarding the hydrostatic infinite variable-speed device, a work device control unit that performs the control regarding a work device such as the spraying device 14, etc. Each control unit is configured by an electronic control unit with a built-in microcontroller or the like, and various types of information, control programs, and the like stored in a non-volatile memory (e.g., EEPROM such as a flash memory) of the microcontroller. The various types of information stored in the non-volatile memory may include the previously generated target route R, and the like. According to the present embodiment, the control units are collectively referred to as "the vehicle control device 11" (see FIG. 2).

The positioning device 16 is a communication device including a positioning control unit 161, a storage unit 162, a communication unit 163, the antenna 164, and the like. The antenna 164 is provided in a front portion and a rear portion of a top portion (the coupling portion 100C) of the vehicle body 100 (see FIG. 3). Further, an indicator lamp 102 or the like indicating the traveling state of the work vehicle 10 is provided in the top portion of the vehicle body 100 (see FIG. 3). Moreover, the battery is coupled to the positioning device 16, and the positioning device 16 is operable while the engine is stopped.

The communication unit 163 is a communication interface that connects the positioning device 16 to the communication network N1 by wire or wirelessly and executes a data communication in accordance with a predetermined communication protocol with an external device such as the base station 40 via the communication network N1.

The antenna 164 is an antenna that receives radio waves (GNSS signals) transmitted from a satellite. As the antennas 164 are provided in the front portion and the rear portion of the work vehicle 10, the current position of the work vehicle 10 may be determined with high accuracy.

The positioning control unit 161 is a computer system including one or more processors and a storage memory such as a non-volatile memory and a RAM. The storage unit 162 is a non-volatile memory, or the like, storing data such as a control program for causing the positioning control unit 161 to perform a positioning process, positioning information, and movement information. The positioning control unit 161 determines the current position of the work vehicle 10 by a predetermined positioning method (e.g., RTK method) based on the GNSS signal received by the antenna 164 from the satellite 50.

The obstacle detection device 17 includes a lidar sensor 171L provided on the front left side of the vehicle body 100 and a lidar sensor 171R provided on the front right side of the vehicle body 100 (see FIG. 3). Each of the lidar sensors measures the distance from the lidar sensor to each distance measurement point (measurement object) in a measurement range by, for example, the time-of-flight (TOF) method in which the distance to the distance measurement point is measured based on the round-trip time it takes for a laser light emitted by the lidar sensor to reach the distance measurement point and come back.

A predetermined range on the front left side of the vehicle body 100 is set as the measurement range of the lidar sensor 171L, and a predetermined range on the front right side of the vehicle body 100 is set as the measurement range of the lidar sensor 171R. Each of the lidar sensors transmits, to the vehicle control device 11, measurement information such as the measured distance to each distance measurement point and the scanning angle (coordinates) to each distance measurement point.

Furthermore, the obstacle detection device 17 includes right and left ultrasonic sensors 172F (see FIG. 3) provided on the front side of the vehicle body 100 and right and left ultrasonic sensors 172R (see FIGS. 4A and 4B) provided on the rear side of the vehicle body 100. Each of the ultrasonic sensors measures the distance from the ultrasonic sensor to the measurement object by the TOF method in which the distance to the distance measurement point is measured based on the round-trip time it takes for an ultrasonic wave transmitted by the ultrasonic sensor to reach the distance measurement point and come back.

A predetermined range on the front left side of the vehicle body 100 is set as the measurement range of the front left ultrasonic sensor 172F, a predetermined range on the front right side of the vehicle body 100 is set as the measurement range of the front right ultrasonic sensor 172F, a predetermined range on the rear left side of the vehicle body 100 is set as the measurement range of the rear left ultrasonic sensor 172R, and a predetermined range on the rear right side of the vehicle body 100 is set as the measurement range of the rear right ultrasonic sensor 172R. Each of the ultrasonic sensors transmits, to the vehicle control device 11, the measurement information including the measured distance to the measurement object and the direction of the measurement object.

Further, the obstacle detection device 17 includes right and left contact sensors 173F (see FIG. 3) provided on the front side of the vehicle body 100 and right and left contact sensors 173R (see FIGS. 4A and 4B) provided on the rear side of the vehicle body 100. The contact sensor 173F on the front side of the vehicle body 100 detects an obstacle when the obstacle comes into contact with the contact sensor 173F. The spraying device 14 is provided in front (on the rear side of the work vehicle 10) of the contact sensor 173R on the rear side of the vehicle body 100, and the contact sensor 173R detects an obstacle due to the movement of the spraying device 14 backward (the front side of the work vehicle 10) when the obstacle comes into contact with the spraying device 14. Each of the contact sensors transmits a detection signal to the vehicle control device 11 when the obstacle is detected.

When there is a possibility that the work vehicle 10 collides with the obstacle, the vehicle control device 11 executes an avoidance process to avoid the obstacle based on the measurement information on the obstacle acquired from the obstacle detection device 17.

With the above configuration, the work vehicle 10 may travel autonomously along the target route R with high accuracy, and the spraying work of the chemical or the like by the spraying device 14 may be performed properly.

The configuration of the work vehicle 10 described above is an example of the configuration of the work vehicle according to the present invention, and the present invention is not limited to the configuration described above. The work vehicle 10 described above is a vehicle that may perform the spraying work to spray the spray material on the first crop row Vr and the second crop rows Vr in the rightward and leftward directions of the first crop row Vr while traveling over the first crop row Vr. According to another embodiment, the work vehicle 10 may have a regular shape such that the entire vehicle body 100 travels in the gap (work passage) between the crop rows Vr instead of the gate-like shape of the vehicle body 100. In this case, the work vehicle 10 autonomously travels in sequence in each work passage without traveling over the crop row Vr. Further, the spraying device 14 includes one spraying unit and performs the spraying work by switching among a spray pattern for spraying the chemical in both the rightward and leftward directions, a spray pattern for spraying the chemical only in the leftward direction, and a spray pattern for spraying the chemical only in the rightward direction.

### [Operation Terminal 20]

As illustrated in FIG. 2, the operation terminal 20 is an information processing apparatus including a control unit 21, a storage unit 22, an operation display unit 23, a communication unit 24, and the like. The operation terminal 20 may include a mobile terminal such as a tablet terminal or a smartphone.

The communication unit 24 is a communication interface that connects the operation terminal 20 to the communication network N1 by wire or wirelessly and executes a data communication in accordance with a predetermined communication protocol with external devices such as the one or more work vehicles 10 and the server 30 via the communication network N1.

The operation display unit 23 is a user interface including a display unit such as a liquid crystal display or an organic EL display that displays various types of information and an operating unit such as a touch panel, a mouse, or a keyboard that receive operations. The operator may operate the operating unit on an operation screen displayed on the display unit to register various types of information (work vehicle information, field information, work information, etc., as described below). Further, the operator may operate the operating unit to give a work start instruction, a traveling stop instruction, and the like, to the work vehicle 10. Furthermore, the operator, at a location away from the work vehicle 10, may know the traveling state, working condition, and surrounding situation of the work vehicle 10 autonomously traveling in the field F along the target route R based on the traveling locus displayed on the operation terminal 20 and the surrounding image of the vehicle body 100.

The storage unit 22 is a non-volatile storage unit, such as an HDD or an SSD, storing various types of information. The storage unit 22 stores a control program such as an autonomous traveling program for causing the control unit 21 to perform an autonomous traveling process (see FIGS. 12 and 13) described below. For example, the autonomous traveling program is recorded in a non-transitory manner on a computer-readable recording medium such as a CD and a DVD and is read by a predetermined reading device (not illustrated) and stored in the storage unit 22. Further, the autonomous traveling program may be downloaded from a server (not illustrated) to the operation terminal 20 via the communication network N1 and stored in the storage unit 22.

The control unit 21 includes control devices such as a CPU, a ROM, and a RAM. The CPU is a processor that executes various arithmetic operations. The ROM is a non-volatile storage unit that previously stores control programs such as a BIOS and an OS for causing the CPU to execute various arithmetic operations. The RAM is a volatile or non-volatile storage unit that stores various types of information and is used as a temporary storage memory (work area) for various processes executed by the CPU. Furthermore, the control unit 21 executes various control programs previously stored in the ROM or the storage unit 22 by the CPU to control the operation terminal 20.

As illustrated in FIG. 2, the control unit 21 includes various processing units such as a setting processing unit 211, a route generation processing unit 212, a control information generation processing unit 213, and an output processing unit 214. Furthermore, the control unit 21 executes various processes in accordance with the control program by the CPU to function as the various processing units. Further, all or some of the processing units may include an electronic circuit. Moreover, the control program may be a program causing a plurality of processors to function as the processing unit.

The setting processing unit 211 sets and registers information (hereinafter referred to as work vehicle information) on the work vehicle 10, information (hereinafter referred to as field information) on the field F, and information (hereinafter referred to as work information) on a work (here, spraying work).

During the setting process of the work vehicle information, when the operator performs a registration operation in the operation terminal 20, the setting processing unit 211 sets information such as the model of the work vehicle 10, the position where the antenna 164 is attached in the work vehicle 10, the type of work machine (here, the spraying device 14), the size and shape of the work machine, the position of the work machine with respect to the work vehicle 10, the vehicle velocity and engine speed of the work vehicle 10 during work, and the vehicle velocity and engine speed of the work vehicle 10 during turning. According to the present embodiment, information on the spraying device 14 is set as information on the work machine.

During the setting process of the field information, when the operator performs a registration operation in the operation terminal 20, the setting processing unit 211 sets information such as the position and shape of the field F, the work start position S to start the work, the work end position G (see FIG. 6) to end the work, and the working direction. Further, the working direction refers to the direction in which the work vehicle 10 travels while performing the spraying work with the spraying device 14 in a working area that is an area of the field F excluding a non-working area such as headland.

The information on the position and shape of the field F may be automatically acquired by, for example, recording the transition of the position information of the antenna 164 obtained when the operator manually drives the work vehicle 10 around the perimeter of the field F once. Further, the position and shape of the field F may also be acquired based on the polygon obtained when the operator operates the operation terminal 20 to designate a plurality of points on a map while the operation terminal 20 displays the map. The area specified by the acquired position and shape of the field F is an area (traveling area) where the work vehicle 10 may travel.

For the setting process of the work information, the setting processing unit 211 is configured to set the number of skips which is the number of work routes to be skipped when the work vehicle 10 turns in the headland, the width of the headland, and the like, as the work information.

The route generation processing unit 212 generates the target route R, which is a route where the work vehicle 10 autonomously travels, based on each piece of setting information. The target route R is, for example, the route from the work start position S to the work end position G (see FIG. 6). The target route R illustrated in FIG. 6 includes the linear work route R1 for spraying the chemical to the crop V in the area where the crop V is planted and the movement route R2 for moving between the crop rows Vr without performing the spraying work.

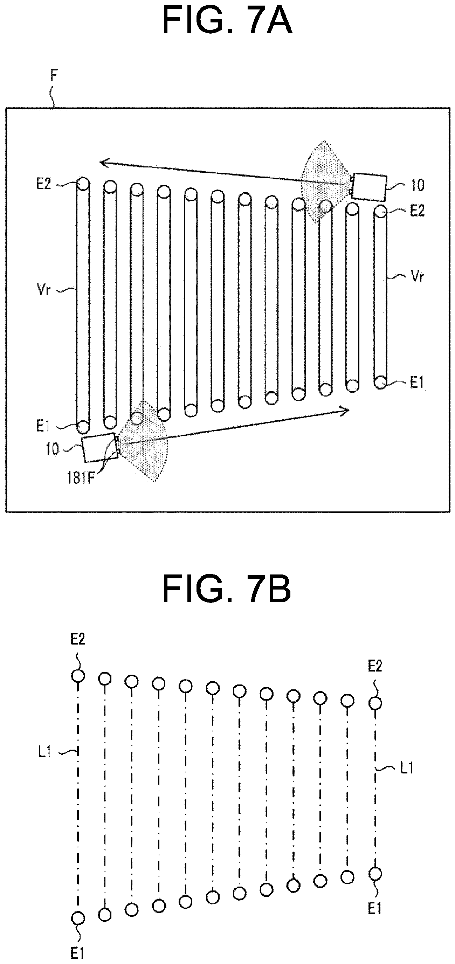

An example of the method for generating the target route R will be described with reference to FIGS. 7A and 7B. FIG. 7A schematically illustrates the crop rows Vr. First, the operator manually drives the work vehicle 10 along the perimeter of the crop rows Vr (see FIG. 7A). The work vehicle 10 detects an end point E1 on one side (a lower side in FIG. 7A) and an end point E2 on the other side (an upper side in FIG. 7A) of each of the crop rows Vr during traveling and acquires the position information (coordinates) of the end points E1 and E2. Furthermore, the end points E1 and E2 may be the positions of the already planted crops V or the target positions indicating the positions of the crops V to be planted in the future. After acquiring the position information (coordinates) of the end points E1 and E2 from the work vehicle 10, the route generation processing unit 212 sets a line L1 (see FIG. 7B) connecting the corresponding end points E1 and E2 as the work route of the crop row Vr and generates the target route R including a plurality of work routes and a movement route (turning route). The method for generating the target route R is not limited to the above-described method. The route generation processing unit 212 may store the generated target route R in the storage unit 22. The route generation processing unit 212 is an example of a route generation processing unit according to the present invention.

The control information generation processing unit 213 generates the control information F1 for controlling the spraying direction (spray pattern) of the chemical for the crops V by the spraying units 14L and 14R provided in the work vehicle 10 in accordance with the position of either the crop V on the work route R1, in which the work vehicle 10 performs the spraying work while traveling autonomously, or the crop V adjacent to the work route R1.

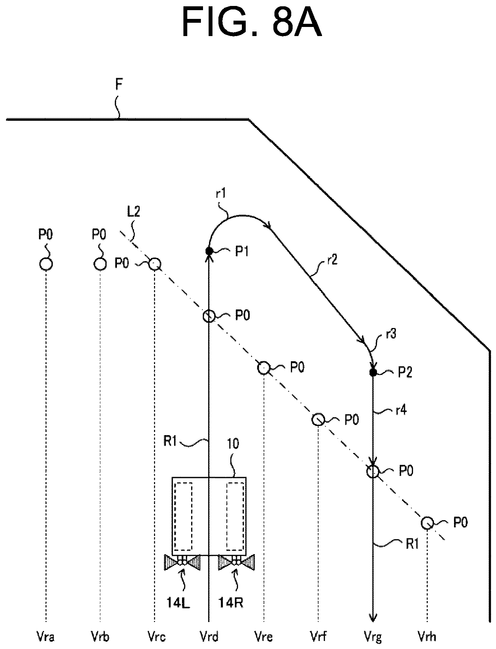

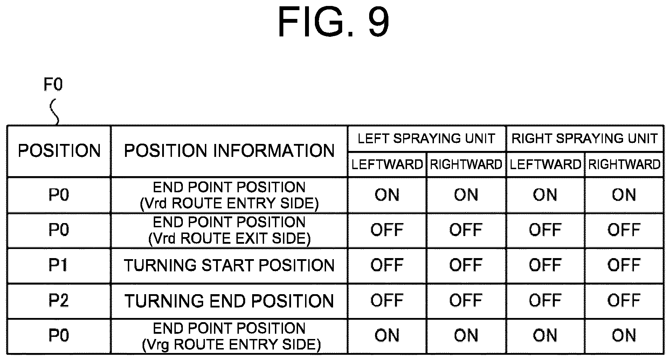

Here, an example of a spraying work method corresponding to conventional control information F0 (see FIG. 9) will be described with reference to FIGS. 8A to 8E. FIGS. 8A to 8E schematically illustrate crop rows Vra to Vrh of the crops V planted in the field F and end points P0 of the respective crop rows. Here, the crops V in the field F are planted such that, in accordance with the shape of the field F, a line L2 connecting the respective end points P0 of the crop rows Vrc to Vrh extends in an oblique direction with respect to a direction (work route direction) in which the crops V are lined up in the crop row Vr.

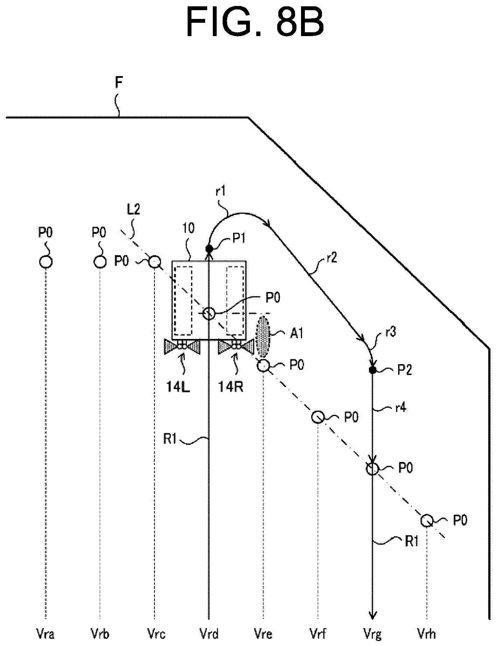

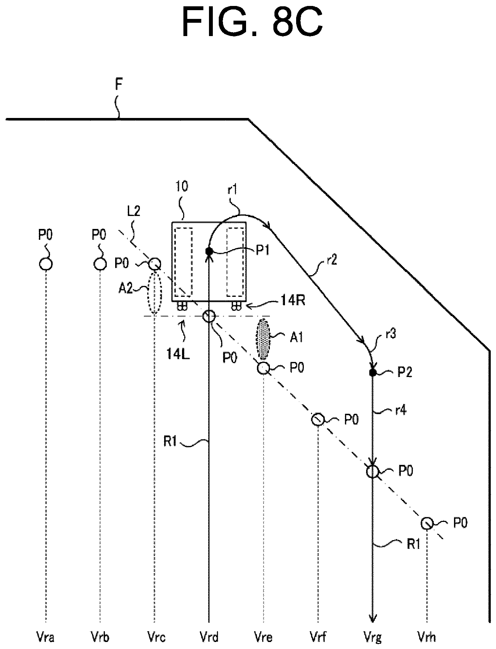

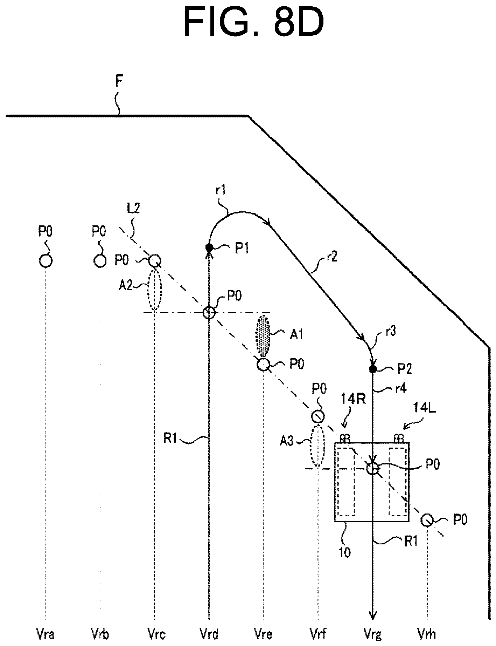

When the conventional work vehicle 10 performs the spraying work in the field F, the work vehicle 10 performs the operation below. First, as illustrated in FIG. 8A, the work vehicle 10 performs the spraying work with the 4-direction spray pattern, with which each of the spraying units 14L and 14R sprays the chemical in both the rightward and leftward directions, while traveling straight in the work passage over the crop row Vrd. Here, as illustrated in FIG. 8B, when the work vehicle 10 passes the position corresponding to the end point P0 of the crop row Vre, the spraying unit 14R continuously sprays the chemical in an area A1 on the right side where the crops V do not exist. Then, as illustrated in FIG. 8C, when the work vehicle 10 reaches the end point P0 of the crop row Vrd, the spraying by the spraying units 14L and 14R is stopped, and the work vehicle 10 starts to turn at a turning start position P1. In this case, in the crop row Vrc, the chemical is not sprayed on the crop V in an area A2 from the position corresponding to the end point P0 of the crop row Vrd to the end point P0 of the crop row Vrc. After the work vehicle 10 starts to turn, the work vehicle 10 moves on a turning route r1, a straight route r2, and a turning route r3, travels straight on a straight route r4 from a turning end position P2, and moves to the end point P0 of the crop row Vrg that is a subsequent work passage (see FIG. 8D).

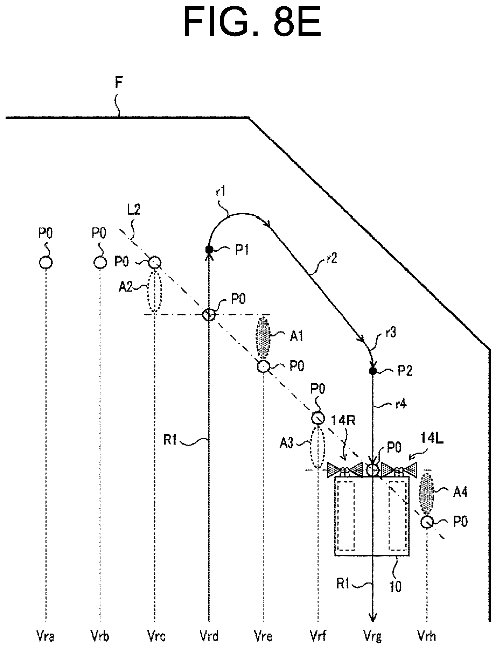

Here, as illustrated in FIG. 8D, in the crop row Vrf, the chemical is not sprayed on the crop V in an area A3 from the end point P0 of the crop row Vrf to the position corresponding to the end point P0 of the crop row Vrg. Then, as illustrated in FIG. 8E, when the work vehicle 10 reaches the end point P0 of the crop row Vrg, each of the spraying units 14L and 14R restarts the spraying work with the 4-direction spray pattern for spraying the chemical both in the leftward direction and the rightward direction. In this case, until the work vehicle 10 reaches the position corresponding to the end point P0 of the crop row Vrh, the spraying unit 14L continuously sprays the chemical in an area A4 on the left side where the crops V do not exist.

FIG. 9 illustrates the control information F0 corresponding to the above-described spraying work. With the conventional work vehicle 10, in the field F illustrated in FIGS. 8A to 8E, the spraying device 14 executes the spraying work based on the control information F0. This results in a disadvantage such that the chemical is sprayed in a wasteful manner in the areas A1 and A4 where the crops V do not exist and the chemical is not sprayed in the areas A2 and A3 where the crops V exist. Therefore, the conventional technique causes excessive or insufficient spraying and a reduction in the work efficiency of the spraying work. Conversely, with the spraying work method according to the present embodiment, the work efficiency of the spraying work may be improved as described below.

Specifically, the control information generation processing unit 213 generates the control information F1 to switch the spray pattern based on the positional relationship of the end points of the respective crop rows Vr. The spray pattern includes the 4-direction spray pattern, the left 3-direction spray pattern, the right 3-direction spray pattern, the 2-direction spray pattern, the left 1-direction spray pattern, and the right 1-direction spray pattern as described above.

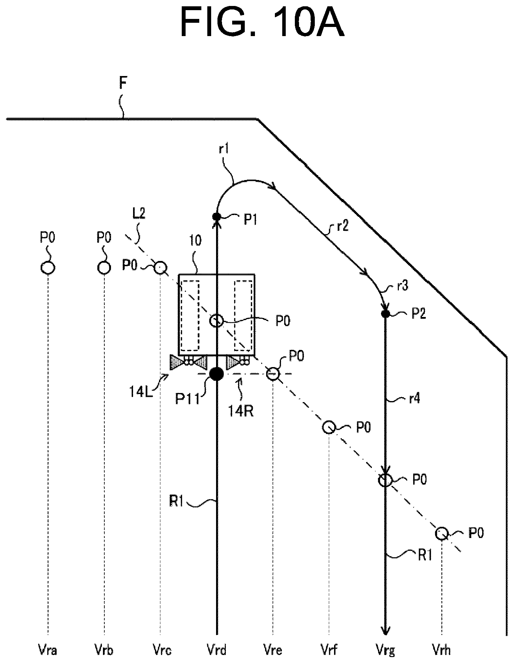

An example of the spraying work method corresponding to the control information F1 (see FIG. 11) according to the present embodiment will be described with reference to FIGS. 10A to 10F. The shape of the field F and the arrangement of the crops V and the crop rows Vra to Vrh are the same as those in the example illustrated in FIGS. 8A to 8E.

First, as in the conventional configuration, the work vehicle 10 performs the spraying work with the 4-direction spray pattern to spray the chemical in both the rightward and leftward directions by each of the spraying units 14L and 14R while traveling straight on the work passage over the crop row Vrd (see FIG. 8A). Here, as illustrated in FIG. 10A, when the work vehicle 10 reaches a position P11 corresponding to the end point P0 of the crop row Vre, the spraying device 14 switches the 4-direction spray pattern to the left 3-direction spray pattern with which the spraying unit 14L sprays the chemical in both the rightward and leftward directions and the spraying unit 14R sprays the chemical only in the leftward direction.

Furthermore, according to the present embodiment, "the work vehicle 10 reaches a position P" means that the positions of the spraying units 14L and 14R of the work vehicle 10 reaches the position P. As the determined current position of the work vehicle 10 indicates the center position of the work vehicle 10, the positions of the spraying units 14L and 14R may be calculated based on the distance from the center position to the spraying units 14L and 14R.

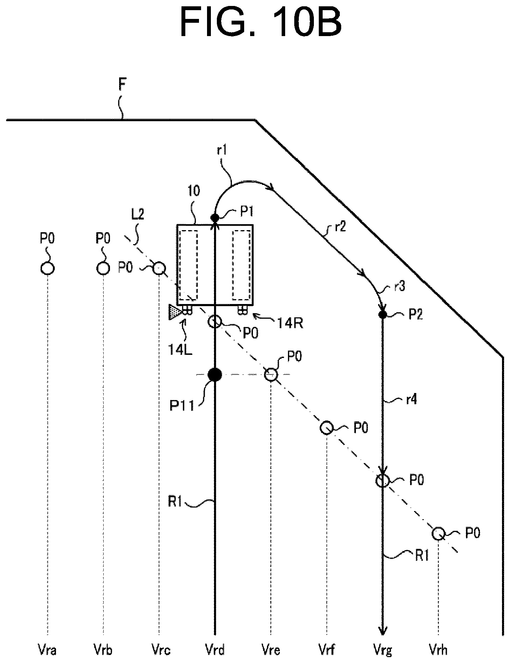

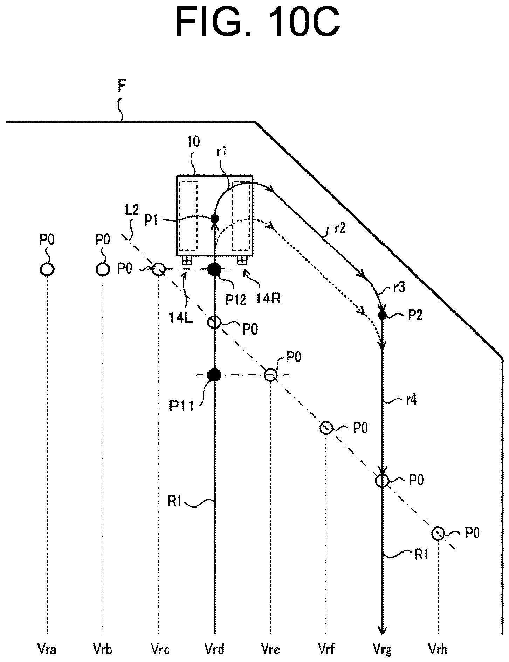

Then, as illustrated in FIG. 10B, when the work vehicle 10 reaches the end point P0 of the crop row Vrd, the spraying device 14 switches the left 3-direction spray pattern to the left 1-direction spray pattern with which the spraying unit 14L sprays the chemical only in the leftward direction and the spraying unit 14R does not spray the chemical. Then, as illustrated in FIG. 10C, the work vehicle 10 travels straight while performing the spraying work with the left 1-direction spray pattern to a position P12 corresponding to the end point P0 of the crop row Vrc and, when the work vehicle 10 reaches the position P12, both the spraying units 14L and 14R stop spraying. Then, when the work vehicle 10 passes the position P12 and reaches the turning start position P1, the work vehicle 10 starts to turn. After starting to turn, the work vehicle 10 moves on the turning route r1, the straight route r2, and the turning route r3, travels straight on the straight route r4 from the turning end position P2, and moves to the end point P0 of the crop row Vrg that is a subsequent work passage.

Here, the work vehicle 10 according to the present embodiment travels straight from the end point P0 of the crop row Vrd to the position P12, and therefore the turning start position P1, the turning end position P2, the turning route r1, the straight route r2, and the turning route r3 are different from the turning start position P1, the turning end position P2, the turning route r1, the straight route r2, and the turning route r3 (the routes in a dotted line in FIG. 10C) in the conventional art. That is, the route generation processing unit 212 generates the target route R based on the position P12.

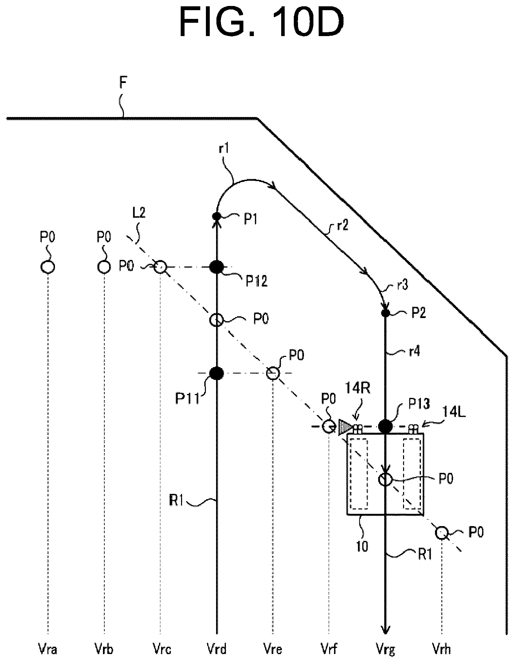

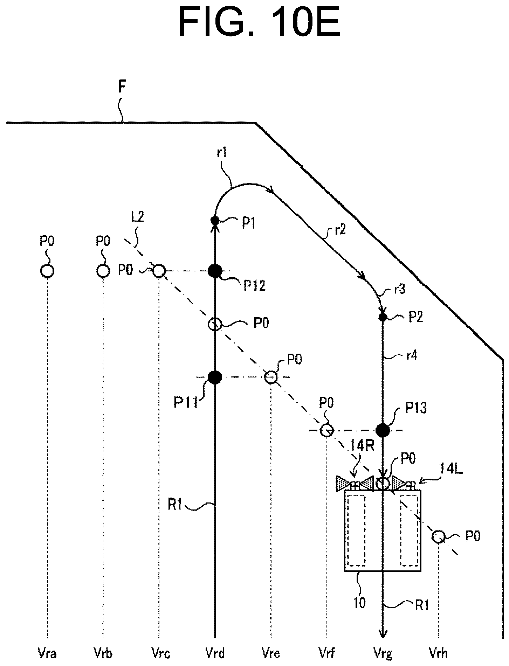

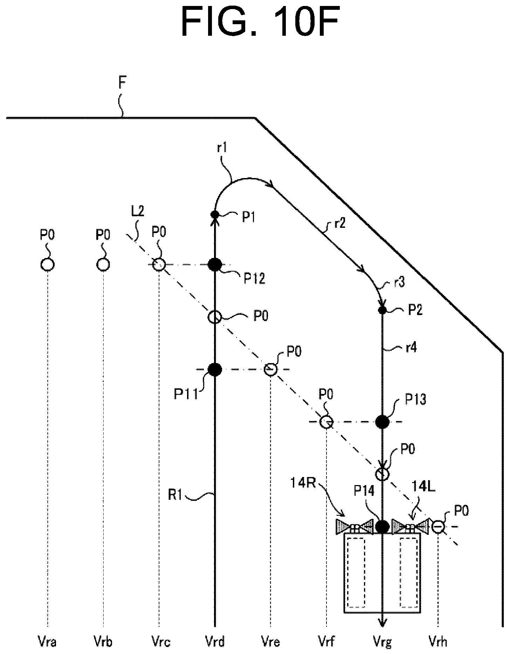

As illustrated in FIG. 10D, when the work vehicle 10, moving on the straight route r4, reaches a position P13 corresponding to the end point P0 of the crop row Vrf, the spraying device 14 restarts the spraying work with the right 1-direction spray pattern with which the spraying unit 14R sprays the chemical only in the rightward direction and the spraying unit 14L does not spray the chemical. Then, as illustrated in FIG. 10E, when the work vehicle 10 reaches the end point P0 of the crop row Vrg, the spraying device 14 switches the right 1-direction spray pattern to the right 3-direction spray pattern with which the spraying unit 14L sprays the chemical only in the rightward direction and the spraying unit 14R sprays the chemical in both the leftward direction and the rightward direction. Then, as illustrated in FIG. 10F, when the work vehicle 10 reaches a position P14 corresponding to the crop row Vrh, the spraying device 14 switches the right 3-direction spray pattern to the 4-direction spray pattern and performs the spraying work. As described above, the work vehicle 10 performs the spraying work while switching the spray pattern in accordance with the position of the crop V adjacent to the work route R1.

FIG. 11 illustrates the control information F1 corresponding to the above-described spraying work. The control information F1 illustrated in FIG. 11 represents the information for controlling the spray pattern when the work vehicle 10 performs the spraying work on the work routes R1 of the crop rows Vrd and Vrg. The control information generation processing unit 213 generates the control information F1 for all the crop rows Vr in the field F.

The work vehicle 10 performs the spraying work based on the control information F1 while autonomously traveling along the target route R in the field F illustrated in FIGS. 10A to 10F. According to the present embodiment, it is possible to prevent wasteful spraying of the chemical in the areas A1 and A4 (see FIGS. 8B and 8E) where the crops V do not exist. Also, it is possible to prevent unsprayed states of the areas A2 and A3 (see FIGS. 8C and 8D) where the crops V exist. Therefore, with the spraying work method according to the present embodiment, the work efficiency of the spraying work may be improved.

Here, the on and off control timings of the spraying units 14L and 14R in the control information F1 are set in accordance with the position of the work vehicle 10 and the positions of the spraying units 14L and 14R.

Specifically, the control information generation processing unit 213 calculates the distance between the determined center position of the work vehicle 10 and the work start position and calculates the control timings of the spraying units 14L and 14R based on the set traveling velocity. Furthermore, as the spraying units 14L and 14R need to turn on/off a spray blower motor (not illustrated), open/close the spray nozzles 14C, etc., the control information generation processing unit 213 considers the operating times of them and calculates the control timings of the spraying units 14L and 14R. Thus, in the control information F1, the control timings are set such that, for example, the chemical is sprayed on the crop V or the spraying of the chemical is stopped in timing when the spraying units 14L and 14R reach the target position. The control information generation processing unit 213 is an example of a control information generation processing unit according to the present invention.

The output processing unit 214 outputs, to the server 30, the route data including the information on the target route R generated by the route generation processing unit 212 and the control information F1 (see FIG. 11) generated by the control information generation processing unit 213. Furthermore, the output processing unit 214 may output the route data to the work vehicle 10.

In addition to the above-described process, the control unit 21 performs the process to display various types of information on the operation display unit 23. For example, the control unit 21 causes the operation display unit 23 to display a registration screen for registering the work vehicle information, the field information, the work information, etc., an operation screen for generating the target route R and the control information F1, an operation screen for causing the work vehicle 10 to start traveling autonomously, and a display screen for displaying the traveling state of the work vehicle 10, etc.

Further, the control unit 21 receives various operations from the operator. Specifically, the control unit 21 receives, from the operator, the work start instruction to cause the work vehicle 10 to start a work, the traveling stop instruction to stop traveling of the work vehicle 10 that is autonomously traveling, etc. After receiving each of the instructions, the control unit 21 outputs the instruction to the work vehicle 10.

When the work start instruction is acquired from the operation terminal 20, the vehicle control device 11 of the work vehicle 10 starts the autonomous traveling and the spraying work of the work vehicle 10. Further, when the traveling stop instruction is acquired from the operation terminal 20, the vehicle control device 11 stops the autonomous traveling and the spraying work of the work vehicle 10.

Furthermore, the operation terminal 20 may access a website (agricultural support site) of an agricultural support service provided by the server 30 via the communication network N1. In this case, the control unit 21 executes a browser program and thus the operation terminal 20 may function as a terminal for operating the server 30.

### [Server 30]

As illustrated in FIG. 2, the server 30 is a server device including a control unit 31, a storage unit 32, an operation display unit 33, a communication unit 34, and the like. Further, the server 30 may be not only a single computer but also a computer system in which a plurality of computers works together. Moreover, various processes executed by the server 30 may be distributed and executed by one or more processors.

The communication unit 34 is a communication interface that connects the server 30 to the communication network N1 by wire or wirelessly and executes a data communication in accordance with a predetermined communication protocol with external devices such as the one or more work vehicles 10 and the one or more operation terminals 20 via the communication network N1.

The operation display unit 33 is a user interface including a display unit such as a liquid crystal display or an organic EL display that displays various types of information and an operating unit such as a touch panel, a mouse, and a keyboard that receives operations.

The storage unit 32 is a non-volatile storage unit, such as an HDD or an SSD, storing various types of information. The storage unit 32 stores a control program such as an autonomous traveling program for causing the control unit 31 to perform the autonomous traveling process (see FIGS. 12 and 13) described below. For example, the autonomous traveling program is recorded in a non-transitory manner on a computer-readable recording medium such as a CD and a DVD and is read by a predetermined reading device (not illustrated) and stored in the storage unit 32. Furthermore, the autonomous traveling program may be downloaded from another server (not illustrated) to the server 30 via the communication network N1 and stored in the storage unit 32.

Furthermore, the storage unit 32 stores the route data including the target route R and the control information F1 output from the operation terminal 20.

Furthermore, for each of the work vehicles 10, the storage unit 32 may store the route data corresponding to the work vehicle 10. For example, the storage unit 32 may store the route data corresponding to a work vehicle 10A and the route data corresponding to a work vehicle 10B.

The control unit 31 includes control devices such as a CPU, a ROM, and a RAM. The CPU is a processor that executes various arithmetic operations. The ROM is a non-volatile storage unit that previously stores control programs such as a BIOS and an OS for causing the CPU to execute various arithmetic operations. The RAM is a volatile or non-volatile storage unit that stores various types of information and is used as a temporary storage memory (work area) for various processes executed by the CPU. Furthermore, the control unit 31 executes various control programs previously stored in the ROM or the storage unit 32 by the CPU to control the server 30.

As illustrated in FIG. 2, the control unit 31 includes various processing units such as an acquisition processing unit 311 and a transfer processing unit 312. Furthermore, the control unit 31 executes various processes in accordance with the control program by the CPU to function as the various processing units. Further, all or some of the processing units may include an electronic circuit. Moreover, the control program may be a program causing a plurality of processors to function as the processing unit.

The acquisition processing unit 311 acquires various types of information from the work vehicle 10 and the operation terminal 20. For example, the acquisition processing unit 311 acquires user information, the field information, work schedule information, the route data, and the like, from the operation terminal 20. Furthermore, the acquisition processing unit 311 acquires information such as work performance from the work vehicle 10. For example, the acquisition processing unit 311 stores, in the storage unit 32, the route data acquired from the operation terminal 20.

The transfer processing unit 312 transfers, to the work vehicle 10, the route data including the target route R (see FIG. 6) and the control information F1 (see FIG. 11). Furthermore, the target route R illustrated in FIG. 6 is the route in the field F where the crops V are planted such that the line connecting the end points of the respective crop rows Vr is perpendicular to the direction (work route direction) in which the crops V are lined up, but according to the present embodiment, the target route R corresponding to the field F illustrated in FIGS. 10A to 10F is generated.

The work vehicle 10 stores, in the storage unit 12, the route data including the target route R and the control information F1 transferred from the server 30. The work vehicle 10 autonomously travels along the target route R while determining the current position of the work vehicle 10 by the positioning device 16.

Here, the work vehicle 10 is configured to travel autonomously when the current position is within the field F and is configured not to travel autonomously when the current position is outside the field F (such as a public road). Furthermore, the work vehicle 10 is configured to travel autonomously when, for example, the current position matches the work start position S.

When the current position matches the work start position S and the operator presses the start button in the operation terminal 20 to give the work start instruction, the work vehicle 10 starts to autonomously travel by the vehicle control device 11 and starts the spraying work by the spraying device 14. That is, the work vehicle 10 permits autonomous traveling on the condition that the current position matches the work start position S. Furthermore, the condition for permitting autonomous traveling of the work vehicle 10 is not limited to the above-described condition.

The vehicle control device 11 causes the work vehicle 10 to autonomously travel from the work start position S to the work end position G based on the target route R acquired from the server 30. Furthermore, the vehicle control device 11 may cause the work vehicle 10 to autonomously travel from the work end position G to the entrance of the field F when the work vehicle 10 finishes its work. When the work vehicle 10 is traveling autonomously, the operation terminal 20 may receive the state (position, traveling velocity, work state, etc.) of the work vehicle 10 from the work vehicle 10 and display it on the operation display unit 23.

Furthermore, the work vehicle 10 performs the spraying work based on the control information F1 while traveling autonomously. Specifically, the work vehicle 10 switches the spraying direction of the chemical for the crops V by the spraying units 14L and 14R in accordance with the position of the crop V adjacent to the work route R1.

For example, when the work vehicle 10 reaches the position P11 corresponding to the end point P0 of the crop row Vre located further on the near side than the end point P0 of the crop row Vrd on the work route R1, the work vehicle 10 stops spraying in the direction of the crop row Vre and continues spraying in the other directions (see FIGS. 10A and 11, "left 3-direction spray pattern"). Further, when the work vehicle 10 reaches the end point P0 of the crop row Vrd, the work vehicle 10 stops spraying in the direction of the crop row Vrd (see FIGS. 10B and 11, "left 1-direction spray pattern").

Furthermore, when the work vehicle 10 reaches the position P12 corresponding to the end point P0 of the crop row Vrc, the work vehicle 10 stops spraying in all the directions and moves to the subsequent work route R1 (see FIGS. 10C and 11). Furthermore, when the work vehicle 10 reaches the position P13 corresponding to the end point P0 of the crop row Vrf located further on the near side than the end point P0 of the crop row Vrg of the work route R1, the work vehicle 10 starts spraying in the direction of the crop row Vrf (see FIGS. 10D and 11, "right 1-direction spray pattern"). Furthermore, when the work vehicle 10 reaches the end point P0 of the crop row Vrg, the work vehicle 10 starts spraying in the direction of the crop row Vrg (see FIGS. 10E and 11, "right 3-direction spray pattern"). Moreover, when the work vehicle 10 reaches the position P14 corresponding to the end point P0 of the crop row Vrh, the work vehicle 10 starts spraying in the direction of the crop row Vrh (see FIGS. 10F and 11, "4-direction spray pattern").

The work vehicle 10 performs the spraying work while autonomously traveling as described above. That is, while traveling over the first crop row Vr (a first spray object row according to the present invention), the work vehicle 10 may perform the spraying work on the first crop row Vr, the second crop row Vr (a second spray object row according to the present invention) adjacent to the first crop row Vr in the rightward direction (a first direction according to the present invention), and the third crop row Vr (a third spray object row according to the present invention) adjacent to the first crop row Vr in the leftward direction (a second direction according to the present invention). In this case, when the work vehicle 10 reaches the position (e.g., the position P11 illustrated in FIG. 10A) corresponding to the second end point P0 of the second crop row Vr located further on the near side than the first end point P0 of the first crop row Vr, the work vehicle 10 stops spraying for the second crop row Vr, and then when the work vehicle 10 reaches the first end point P0, stops spraying for the first crop row Vr, and then when the work vehicle 10 reaches the position (e.g., the position P12 illustrated in FIG. 10C) corresponding to the third end point P0 of the third crop row Vr located further in the traveling direction than the first end point P0, stops spraying for the third crop row Vr.

According to another embodiment, the control unit 31 of the server 30 may generate the target route R and the control information F1. Specifically, the control unit 31 may have the functions of the route generation processing unit 212 and the control information generation processing unit 213 of the operation terminal 20. Furthermore, according to another embodiment, the control unit 21 of the operation terminal 20 may generate the target route R, and the control unit 31 of the server 30 may generate the control information F1.

According to another embodiment, when the operation terminal 20 is configured to output the route data to the work vehicle 10, the vehicle control device 11 of the work vehicle 10 performs the autonomous traveling and spraying work based on the route data acquired from the operation terminal 20.

### [Autonomous Traveling Process]

An example of the autonomous traveling process performed by the vehicle control device 11 of the work vehicle 10, the control unit 21 of the operation terminal 20, and the control unit 31 of the server 30 will be described below with reference to FIGS. 12 and 13.

Furthermore, the present invention may be regarded as the invention of an autonomous traveling method for executing one or more steps included in the autonomous traveling process. Furthermore, one or more steps included in the autonomous traveling process described here may be omitted as appropriate. Further, the steps in the autonomous traveling process may be executed in a different order as long as the same function effect is obtained. Further, in the example described here, the vehicle control device 11, the control unit 21, and the control unit 31 execute the steps in the autonomous traveling process, but the autonomous traveling method in which one or more processors execute the steps in the autonomous traveling process in a distributed manner is also considered as another embodiment. Moreover, the autonomous traveling method also includes the spraying work method according to the present invention.

At Step S1, the control unit 21 of the operation terminal 20 registers various types of setting information. Specifically, the control unit 21 sets and registers the information (work vehicle information) on the work vehicle 10, information (field information) on the field F, and information (work information) on the work based on the operator's setting operation.

Subsequently, at Step S2, the control unit 21 generates the target route R based on the various types of setting information. For example, the control unit 21 generates the target route R based on the position where the crop V is located in the field F (see FIGS. 7A and 7B). Furthermore, the control unit 21 generates the control information F1 (see FIG. 11) based on the various types of setting information and the target route R. The control unit 21 outputs the route data including the target route R and the control information F1 generated to the server 30.

Subsequently, at Step S3, after acquiring the route data output from the operation terminal 20, the control unit 31 of the server 30 stores the route data in association with the identification information of the operation terminal 20 and the work vehicle 10 in the storage unit 32.

At Step S4, the control unit 31 transfers, to the work vehicle 10, the route data corresponding to the work vehicle 10.

Subsequently, at Step S5, the vehicle control device 11 of the work vehicle 10 determines whether the work start instruction has been acquired from the operation terminal 20. For example, when the operator presses the start button in the operation terminal 20, the operation terminal 20 outputs the work start instruction to the work vehicle 10. When the vehicle control device 11 has acquired the work start instruction from the operation terminal 20 (S5: Yes), the process proceeds to Step S6. The vehicle control device 11 waits until the work start instruction is acquired from the operation terminal 20 (S5: No).

Subsequently, at Step S6, after acquiring the work start instruction from the operation terminal 20 and acquiring the route data transferred from the server 30, the vehicle control device 11 starts to travel autonomously along the target route R corresponding to the route data. Further, the vehicle control device 11 stores the route data acquired from the server 30 in the storage unit 12.

Subsequently, at Step S7, the vehicle control device 11 causes the spraying device 14 to perform a spraying control process. FIG. 13 illustrates an example of the spraying control process. Further, the spraying control process illustrated in FIG. 13 is the process corresponding to the control information F1 of the spraying process illustrated in FIGS. 10A to 10F and is a part of the spraying process for all the crops V.

Specifically, when the work vehicle 10 has reached the end point P0 of the crop row Vrd (S21: Yes), at Step S22, the spraying device 14 turns on the spray nozzles 14C of the spraying units 14L and 14R in both the rightward and leftward directions to perform spraying with the 4-direction spray pattern (see FIG. 8A).

Subsequently, when the work vehicle 10 has reached the position P11 corresponding to the end point P0 of the crop row Vre (S23: Yes), at Step S24, the spraying device 14 turns off the rightward spray nozzle 14C of the spraying unit 14R to switch the 4-direction spray pattern to the left 3-direction spray pattern (see FIG. 10A).

Subsequently, when the work vehicle 10 has reached the end point P0 of the crop row Vrd (S25: Yes), at Step S26, the spraying device 14 turns off the leftward spray nozzle 14C of the spraying unit 14R and the rightward spray nozzle 14C of the spraying unit 14L (turns off the central spray nozzle) to switch the left 3-direction spray pattern to the left 1-direction spray pattern (see FIG. 10B).

Subsequently, when the work vehicle 10 has reached the position P12 corresponding to the end point P0 of the crop row Vrc (S27: Yes), at Step S28, the spraying device 14 turns off the leftward spray nozzle 14C of the spraying unit 14L to stop spraying in all the directions (See FIG. 10C). Then, the work vehicle 10 turns and travels from the turning start position P1 to the turning end position P2 and moves to the subsequent crop row Vrg (see FIG. 10C).

Subsequently, when the work vehicle 10 has reached the position P13 corresponding to the end point P0 of the crop row Vrf on the straight route r4 toward the end point P0 of the crop row Vrg (S29: Yes), at Step S30, the spraying device 14 turns on the rightward spray nozzle 14C of the spraying unit 14R and restarts the spraying work with the right 1-direction spray pattern (see FIG. 10D).

Subsequently, when the work vehicle 10 has reached the end point P0 of the crop row Vrg (S31: Yes), at Step S32, the spraying device 14 turns on the leftward spray nozzle 14C of the spraying unit 14R and the rightward spray nozzle 14C of the spraying unit 14L (turns on the central spray nozzle) to switch the right 1-direction spray pattern to the right 3-direction spray pattern (see FIG. 10E).

Subsequently, when the work vehicle 10 has reached the position P14 corresponding to the end point P0 of the crop row Vrh (S33: Yes), at Step S34, the spraying device 14 turns on the leftward spray nozzle 14C of the spraying unit 14L to switch the right 3-direction spray pattern to the 4-direction spray pattern (see FIG. 10F).

As described above, the spraying device 14 executes the spraying control process based on the control information F1 in accordance with the instruction from the vehicle control device 11.

With reference back to FIG. 12, at Step S8, the vehicle control device 11 determines whether the work vehicle 10 has ended the work. The vehicle control device 11 determines that the work has ended when the position of the work vehicle 10 matches the work end position G. When the work vehicle 10 has ended the work (S8: Yes), the autonomous traveling process ends. The vehicle control device 11 repeatedly performs the spraying control process at Step S7 and continues autonomous traveling until the work vehicle 10 ends the work.

The process at Steps S1 to S3 and S4 to S8 may be performed independently. For example, the autonomous traveling system 1 performs the process at Steps S1 to S3 at the initial setup stage when the work vehicle 10 is introduced. Furthermore, the autonomous traveling system 1 performs the process at Steps S4 to S8 when the operator performs the work with the work vehicle 10.

As described above, the autonomous traveling system 1 according to the present embodiment generates the target route R for autonomous traveling of the work vehicle 10 that performs the spraying work for the spray objects (e.g., the crops V) arranged in a plurality of rows in the working area (e.g., the field F) and generates the control information F1 for controlling the spraying direction of the spray material (e.g., chemical) for the spray objects by the spraying units 14L and 14R provided in the work vehicle 10 in accordance with the position of either the spray object on the work route, on which the work vehicle 10 performs the spraying work while traveling autonomously, or the spray object adjacent to the work route. Furthermore, the autonomous traveling method (spraying work method) according to the present embodiment includes, by one or more processors, generating the target route R for the work vehicle 10 that performs the spraying work for the spray objects (e.g., the crops V) arranged in a plurality of rows in the working area (e.g., the field F) (route generation process), causing the work vehicle 10 to autonomously travel along the target route R (traveling process), and switching the spraying direction of the spray material (e.g., chemical) for the spray objects by the spraying units 14L and 14R provided in the work vehicle 10 in accordance with the position of the spray object adjacent to the work route on which the work vehicle 10 performs the spraying work while autonomously traveling (switching process).

With the above configuration, for example, when the crops are planted such that the ends of the adjacent crop rows extend in an oblique direction with respect to the work route direction (see FIG. 10A, etc.), it is possible to prevent wasteful spraying of the chemical in the areas A1 and A4 (see FIGS. 8B and 8E) where the crops V do not exist. Also, it is possible to prevent unsprayed states of the areas A2 and A3 (see FIGS. 8C and 8D) where the crops V exist. Therefore, with the spraying work method according to the present embodiment, the work efficiency of the spraying work may be improved. Further, the work vehicle 10 may perform the spraying work based on the control information F1 included in the route data and do not need to perform the spraying work based on, for example, the detection result of the obstacle detection device 17, which may result in a reduction of the processing load of the spraying process. Moreover, even in the field F that is not rectangular, the work vehicle 10 may perform the optimal spraying work without falling outside the field F.

The present invention is not limited to the above-described embodiment. Other embodiments of the present invention will be described below.

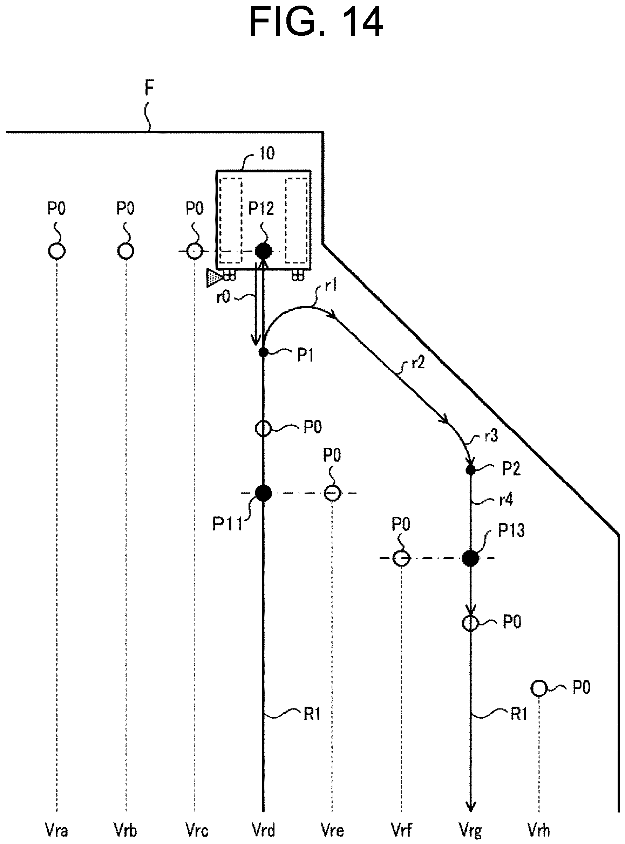

For example, in the field F illustrated in FIG. 14, when the work vehicle 10 travels while performing the spraying work with the left 1-direction spray pattern to the position P12 corresponding to the end point P0 of the crop row Vrc, it is difficult for the work vehicle 10 to start turning at the position P12. Therefore, when the work vehicle 10 reaches the position P12, the work vehicle 10 stops the spraying work, moves back to a predetermined position (the turning start position P1) on the work route R1, and turns from the turning start position P1 toward the subsequent work route.

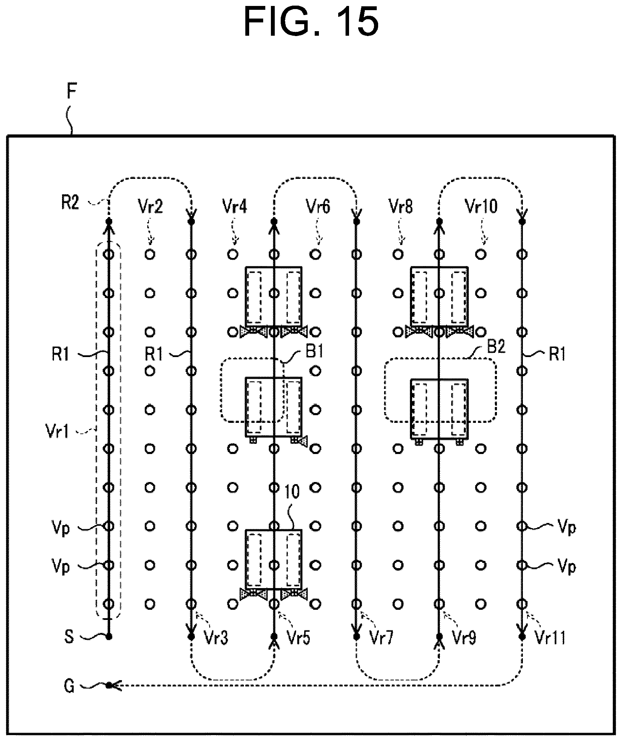

Furthermore, for example, in the field F illustrated in FIG. 15, it is possible that there are areas B1 and B2 where the crops V do not exist in the middle of the crop rows Vr. In this case, the work vehicle 10 stops spraying for the areas B1 and B2 where the crops V do not exist by the spraying units 14L and 14R and restarts spraying by the spraying units 14L and 14R in the area where the crop V exists.

For example, in the crop row Vr5, the work vehicle 10 performs the spraying work with the right 1-direction spray pattern when reaching the area B1 and performs the spraying work with the 4-direction spray pattern after passing the area B1. Furthermore, for example, in the crop row Vr9, the work vehicle 10 stops the spraying work when reaching the area B2 and performs the spraying work with the 4-direction spray pattern after passing the area B2.

Furthermore, the position information on the areas B1 and B2 is previously set and registered in the control information F1. Further, when the obstacle detection device 17 detects the areas B1 and B2 during autonomous traveling, the work vehicle 10 may switch the spray pattern based on the detection result. For example, the obstacle detection device 17 may detect that the crops V do not exist in the middle of the crop row Vr based on the detection results of the lidar sensors 171L and 171R.

Furthermore, when the work vehicle 10 moves from the one crop row Vr to the subsequent crop row Vr, position correction control is performed to reduce a position deviation and orientation deviation in a headland area. Here, in the field F where the crops V are planted such that the ends of the adjacent crop rows extend in an oblique direction with respect to the work route direction, as illustrated in FIGS. 8A to 8E, the turning travel distance by which the work vehicle 10 travels on the turning route r3 on the entry side of the crop row Vrg may be shorter than the turning travel distance by which the work vehicle 10 travels on the turning route r1 on the exit side of the crop row Vrd. In this case, the work vehicle 10 moves to the turning route r3 with the remaining position deviation and orientation deviation on the straight route r2 immediately before the turning route r3, which makes it difficult to adequately perform the position correction control during traveling on the turning route r3. This causes a disadvantage of a large position deviation and orientation deviation with respect to the crop row Vrg when the work vehicle 10 finishes traveling on the turning route r3.

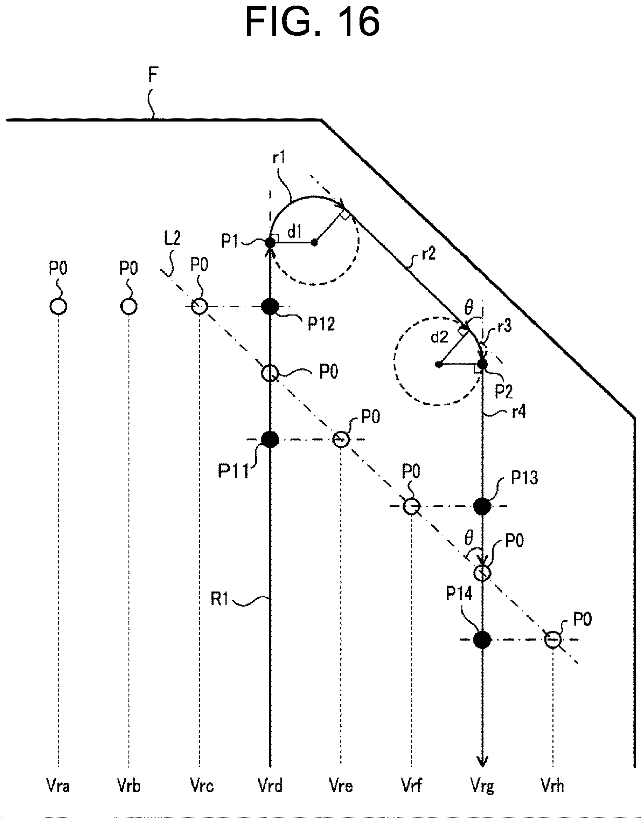

Therefore, according to another embodiment, for example, as illustrated in FIG. 16, in the field F where the crops V are planted such that, in accordance with the shape of the field F, the line L2 connecting the end points P0 of the crop rows Vrc to Vrh extends in an oblique direction with respect to the direction (work route direction) in which the crops V are lined up in the crop row Vr, the route generation processing unit 212 may set the turning start position of the turning route r3 at such a position that the perimeter (turning travel distance) of the turning route r3 is more than a predetermined length. For example, the route generation processing unit 212 generates the straight route r2 immediately before the turning route r3 so as to be parallel to the line L2 and sets the turning start position of the turning route r3 at such a position that the perimeter of the turning route r3 is more than a predetermined length on the straight route r2. Thus, the perimeter (turning travel distance) of the turning route r3 may be longer than that in the conventional configuration (see FIGS. 8A to 8E). Further, as the straight route r2 is generated to be parallel to the line L2, a turning radius d1 at the turning start side may be identical to a turning radius d2 at the turning end side, and the length of the straight route r4 toward the work route R1 for the subsequent entry may be longer. Accordingly, the position deviation and orientation deviation may be reduced when the work vehicle 10 moves between the work routes R1.

According to each of the above embodiments, the operation terminal 20 alone corresponds to the spraying work system according to the present invention, but the spraying work system according to the present invention may include the operation terminal 20 and the work vehicle 10.

### REFERENCE SIGNS LIST

1 Autonomous traveling system
10 Work vehicle
11 Vehicle control device
14 Spraying device
14L (Left) spraying unit
14R (Right) spraying unit
20 Operation terminal
30 Server
40 Base station
50 Satellite
211 Setting processing unit
212 Route generation processing unit
213 Control information generation processing unit
214 Output processing unit
311 Acquisition processing unit
312 Transfer processing unit
F Field (working area)
F1 Control information
P0 End point
R Target route
R1 Work route
V Crop (spray object)
Vr Crop row (spray object row)

## Claims

1. A spraying work method comprising:
generating a target route for a work vehicle that performs a spraying work on spray objects arranged in a plurality of rows in a working area;
causing the work vehicle to autonomously travel along the target route; and
switching a spraying direction of a spray material for the spray object by a spraying unit provided in the work vehicle in accordance with a position of either the spray object on a work route, on which the work vehicle performs the spraying work while autonomously traveling, or the spray object adjacent to the work route.

2. The spraying work method according to claim 1, further comprising, when the work vehicle reaches, out of a first spray object adjacent to the work route in a first direction, which is one of rightward and leftward directions, and a second spray object adjacent to the work route in a second direction, which is an other direction of the rightward and leftward directions, a second end point of the second spray object located further on a near side than a first end point of the first spray object, stopping spraying in the second direction by the spraying unit and continuing spraying in the first direction by the spraying unit.

3. The spraying work method according to claim 2, further comprising, when the work vehicle passes the second end point and reaches the first end point, stopping spraying in the first direction by the spraying unit.

4. The spraying work method according to claim 3, further comprising, after stopping spraying in the first direction and the second direction by the spraying unit, moving the work vehicle to the subsequent work route.

5. The spraying work method according to claim 4, further comprising, after stopping spraying in the first direction and the second direction by the spraying unit, moving the work vehicle back to a predetermined position on the work route and turning the work vehicle from the predetermined position toward the subsequent work route.

6. The spraying work method according to claim 1, the work vehicle being capable of, while traveling over a first spray object row, performing the spraying work on the first spray object row, a second spray object row adjacent to the first spray object row in a first direction, which is one of rightward and leftward directions, and a third spray object row adjacent to the first spray object row in a second direction, which is an other direction of the rightward and leftward directions,
the spraying work method further comprising, when the work vehicle reaches a position corresponding to a second end point of the second spray object row located further on a near side than a first end point of the first spray object row, stopping spraying for the second spray object row by the spraying unit, and thereafter when the work vehicle reaches the first end point, stopping spraying for the first spray object row by the spraying unit, and thereafter when the work vehicle reaches a position corresponding to a third end point of the third spray object row located further in a traveling direction than the first end point, stopping spraying for the third spray object row by the spraying unit.

7. The spraying work method according to any one of claims 1 to 6, further comprising, when there is an area where the spray object does not exist in middle of the work route, stopping spraying for the area by the spraying unit and restarting spraying by the spraying unit in an area where the spray object exists.

8. The spraying work method according to any one of claims 1 to 7, further comprising transferring the target route and control information for controlling the spraying direction of the spraying unit to the work vehicle.

9. A spraying work system comprising:
a route generation processing unit that generates a target route for autonomous traveling of a work vehicle that performs a spraying work on spray objects arranged in a plurality of rows in a working area; and
a control information generation processing unit that generates control information for controlling a spraying direction of a spray material for the spray object by a spraying unit provided in the work vehicle in accordance with a position of either the spray object on a work route, on which the work vehicle performs the spraying work while autonomously traveling, or the spray object adjacent to the work route.

10. A spraying work program causing one or more processors to execute:
generating a target route for a work vehicle that performs a spraying work on spray objects arranged in a plurality of rows in a working area;
causing the work vehicle to autonomously travel along the target route; and
switching a spraying direction of a spray material for the spray object by a spraying unit provided in the work vehicle in accordance with a position of either the spray object on a work route, on which the work vehicle performs the spraying work while autonomously traveling, or the spray object adjacent to the work route.
